# FASCICULE DE BREVET EUROPEEN

(11) **EP 3 713 777 B1**
(45) Date de publication et mention de la délivrance du brevet: **06.10.2021**
(21) Numéro de dépôt: 18822427.3
(22) Date de dépôt: 22.11.2018
(51) Int. Cl.: B60C 11/00, B60C 11/03, B60C 9/20, B60C 9/22

(54) **PNEUMATIQUE POUR VEHICULE DE TOURISME**
REIFEN FÜR PERSONENKRAFTWAGEN
TYRE FOR PASSENGER VEHICLE

(30) Priorité: 24.11.2017 FR 1761130
(43) Date de publication de la demande: 30.09.2020
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); DURAND-GASSELIN, Benoit, 63040 Clermont Ferrand Cedex 9 (FR); HELLOT, Fabien, 63040 Clermont-Ferrand Cedex 9 (FR)
(74) Mandataire: Desbordes, Guillaume
(86) Numéro de dépôt international: PCT/FR2018/052950
(87) Numéro de publication internationale: WO 2019/102149

(56) Documents cités:
- EP-A1- 2 781 373
- WO-A1-2005/014925
- FR-A1- 3 041 568
- US-A1- 2014 116 587
- US-A1- 2015 314 647

## Description

L'invention a pour objet un pneumatique radial destiné à équiper un véhicule de tourisme, appelé usuellement pneumatique de tourisme.

Le domaine de pneumatique plus particulièrement concerné est celui des pneumatiques de tourisme dont la section méridienne est caractérisée par une largeur de section S et une hauteur de section H, au sens de la norme de la European Tyre and Rim Technical Organisation ou « ETRTO », telles que le rapport H/S, exprimé en pourcentage, est au plus égal 70, et la largeur de section S est au moins égale à 175 mm. En outre le diamètre au seat D, définissant le diamètre de la jante de montage du pneumatique, est au moins égal à 14 pouces, et généralement au plus égal à 24 pouces.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend une bande de roulement, destinée à entrer en contact avec le sol par l'intermédiaire d'une surface de roulement, et reliée par l'intermédiaire de deux flancs à deux bourrelets, assurant la liaison mécanique entre le pneumatique et la jante sur laquelle il est monté. Un pneumatique radial comprend une armature de renforcement, comprenant une armature de sommet, radialement intérieure à la bande de roulement, et une armature de carcasse, généralement radialement intérieure à l'armature de sommet.

La bande de roulement comprend des éléments en relief séparés les uns des autres par des creux. L'agencement des éléments en relief et des creux constitue la sculpture de la bande de roulement. Les éléments en relief s'étendent radialement vers l'extérieur à partir d'une surface de fond jusqu'à la surface de roulement. Pour un pneumatique à l'état neuf, la distance radiale entre la surface de fond et la surface de roulement, mesurée dans le plan équatorial du pneumatique, est appelée hauteur radiale Hₛ des éléments en relief ou, plus communément, hauteur de sculpture Hₛ. La proportion de creux par rapport aux éléments en relief est définie par un taux d'entaillement volumique T_{EV}, égal au rapport entre le volume total des creux et la somme des volumes totaux respectifs des creux et des éléments en relief. Le volume total des creux est la somme des volumes élémentaires des creux ayant, typiquement, une largeur axiale au moins égale à 1 mm, c'est-à-dire des creux qui ne sont pas de simples incisions. Les mesures de volumes sont réalisées par des relevés de profil de la bande de roulement du pneumatique neuf, par exemple, par laser. Le profil de la bande de roulement a une largeur axiale égale à la largeur axiale de la surface de roulement en contact avec le sol, lorsque le pneumatique, monté sur sa jante nominale, est gonflé à sa pression nominale et soumis à sa charge nominale, les dites conditions nominales étant définies par la norme de l'ETRTO. Pour la bande de roulement d'un pneumatique de tourisme de l'état de la technique de référence, à l'état neuf, les éléments en relief ont généralement une hauteur radiale H_{S} au moins égale à 6.5 mm et au plus égale à 8 mm, et le taux d'entaillement volumique T_{EV} est au moins égal à 22% et au plus égal à 30%.

Parmi les creux de la bande de roulement ayant un volume total Vc, on distingue des creux dits principaux, ayant chacun une largeur moyenne au moins égale à 6 mm et ayant un volume total V_{CP}. Ces creux principaux ont, en particulier, pour fonction de stocker l'eau dans l'aire de contact entre la bande de roulement et le sol et de l'évacuer hors de l'aire de contact dans le but d'assurer la performance d'hydroplanage. Ils sont qualifiés de creux sensiblement circonférentiels, ou longitudinaux, lorsque leur ligne moyenne forme avec la direction circonférentielle XX' du pneumatique un angle au plus égale à 45°. Ils sont qualifiés de creux sensiblement axiaux, ou transversaux, lorsque leur ligne moyenne forme avec la direction circonférentielle XX' du pneumatique un angle au moins égale à 45°.

La bande de roulement comprend au moins un matériau polymérique de type mélange élastomérique, c'est-à-dire un matériau polymérique obtenu par mélangeage d'au moins un élastomère, d'au moins une charge renforçante et d'un système de réticulation. Le plus souvent, la bande de roulement est constituée par un mélange élastomérique unique.

Une caractéristique physique usuelle d'un mélange élastomérique est sa température de transition vitreuse T_{g}, température à laquelle le mélange élastomérique passe d'un état caoutchouteux déformable à un état vitreux rigide. La température de transition vitreuse T_{g} d'un mélange élastomérique est généralement déterminée lors de la mesure des propriétés dynamiques du mélange élastomérique, sur un viscoanalyseur par exemple de type Metravib VA4000, selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G"/G'. La température de transition vitreuse T_{g} est la température à laquelle la perte dynamique tgδ atteint un maximum lors du balayage en température.

Le comportement mécanique d'un mélange élastomérique peut être caractérisé, en statique, par sa dureté Shore A, mesurée conformément aux normes DIN 53505 ou ASTM 2240, et, en dynamique, par son module complexe de cisaillement dynamique G*, tel que précédemment défini, à une température donnée, typiquement à 23°C.

La dissipation thermique, ou hystérèse, d'un mélange élastomérique peut être caractérisée, en statique, par sa perte à 60°C, qui est une perte d'énergie à 60 °C, mesurée par rebond à énergie imposée mesurée au sixième choc et dont la valeur, exprimée en %, est le rapport entre la différence entre l'énergie fournie et l'énergie restituée et l'énergie fournie. Elle peut également être caractérisée, en dynamique, par sa perte dynamique tgδ, telle que précédemment définie, à une température donnée, typiquement à 23°C.

Le matériau constitutif de la bande de roulement d'un pneumatique de tourisme de l'état de la technique de référence est un mélange élastomérique ayant une température de transition vitreuse T_{g} au moins égale à -12°C et au plus égale à -5°C, une dureté Shore A au moins égale à 65 et au plus égale à 68, une perte à 60°C au moins égale à 25% et au plus égale à 33% et une perte dynamique tgδ à 23°C au moins égale à 0.32 et au plus égale à 0.44.

L'armature de sommet, radialement intérieure à la bande de roulement et le plus souvent, radialement extérieure à l'armature de carcasse, comprend, radialement de l'extérieur vers l'intérieur, une armature de frettage comprenant au moins une couche de frettage et une armature de travail comprenant au moins une couche de travail.

L'armature de sommet a pour fonction de reprendre à la fois les sollicitations mécaniques de gonflage, générées par la pression de gonflage du pneumatique et transmises par l'armature de carcasse, et les sollicitations mécaniques de roulage, générées par le roulage du pneumatique sur un sol et transmises par la bande roulement. L'armature de travail a pour fonction spécifique de conférer au pneumatique de la rigidité selon les directions circonférentielle, axiale et radiale et, en particulier, de la tenue de route. L'armature de frettage a pour fonction spécifique d'apporter une rigidité circonférentielle supplémentaire par rapport à l'armature de travail, pour limiter les déformations radiales du pneumatique.

L'armature de frettage, pour un pneumatique de tourisme, comprend le plus souvent une seule couche de frettage. Une couche de frettage comprend des renforts généralement en textile, par exemple en polyamide aliphatique tel que le nylon, enrobés dans un mélange élastomérique et parallèles entre eux. Les renforts forment, avec la direction circonférentielle XX' du pneumatique, un angle A_{F}, mesuré dans le plan équatorial XZ du pneumatique, au plus égal à 5°, en valeur absolue.

L'armature de travail, pour un pneumatique de tourisme, comprend usuellement deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, des angles (A_{T1}, A_{T2}), mesurés dans le plan équatorial XZ du pneumatique, dont la valeur absolue est généralement au moins égale à 20° et au plus égale à 40°. L'armature de travail a une largeur axiale L_{T}, définie comme la largeur axiale maximale des couches de travail, au moins égale à la largeur axiale L_{F} de l'armature de frettage, définie le plus souvent comme la largeur axiale de l'unique couche de frettage.

Les renforts métalliques des couches de travail sont des câbles constitués par un assemblage de fils métalliques, généralement en acier et, plus précisément, en acier au carbone. A titre d'exemple, les renforts métalliques utilisés pour le pneumatique de tourisme de l'état de la technique, pris en référence, est un câble 2.30, constitué par un assemblage torsadé de deux fils métalliques ayant chacun un diamètre égal à 0.30 mm.

De façon générale, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Aₚ résulte de la plasticité (déformation irréversible au-delà de la limite d'élasticité) du métal de ces fils métalliques pris individuellement. Ces différents allongements ainsi que leurs significations respectives, bien connus de l'homme du métier, sont décrits, par exemple, dans les documents US 5843583, WO 2005014925 et WO 2007090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Les renforts métalliques des couches de travail sont le plus souvent inextensibles, c'est-à-dire caractérisés par un allongement relatif, sous une force de traction égale à 10% de la force à rupture Fₘ, au plus égal à 0.2% et un module élastique en extension compris usuellement entre 150 GPa et 200 GPa.

Radialement à l'intérieur de l'armature de sommet, l'armature de carcasse comprend généralement au moins une couche de carcasse comprenant des renforts le plus souvent en matériau textile, enrobés dans un matériau élastomérique et parallèles entre eux. Les renforts d'une couche de carcasse forment, avec la direction circonférentielle XX' du pneumatique, un angle A_{C} au moins égal à 85° et au plus égal 95°. Un matériau textile couramment utilisé pour les renforts d'une couche de carcasse, pour un pneumatique de tourisme de l'état de la technique, est un polyester tel qu'un polyéthylène téréphtalate (PET).

Une couche de carcasse peut être retournée ou non retournée. Une couche de carcasse est dite retournée, lorsqu'elle comprend une partie principale, reliant les deux bourrelets du pneumatique entre eux, et s'enroule, dans chaque bourrelet, de l'intérieur vers l'extérieur du pneumatique autour d'un élément de renforcement circonférentiel ou tringle, pour former un retournement ayant une extrémité libre. Une couche de carcasse est non retournée, lorsqu'elle est constituée uniquement d'une partie principale, reliant les deux bourrelets entre eux, sans s'enrouler autour d'une tringle.

Les principales performances visées pour un pneumatique de tourisme sont, de manière non exhaustive, les adhérences longitudinale et transversale sur sol mouillé et sur sol sec, le comportement, en particulier à faible accélération transversale, l'usure et la résistance au roulement.

Actuellement, les constructeurs automobiles expriment une forte demande vis-à-vis d'une baisse de la résistance au roulement, pour diminuer la consommation de carburant. Or il est connu de l'homme du métier qu'une baisse de la résistance au roulement se fait généralement au détriment d'autres performances-clés telles que les divers types d'adhérence (longitudinale/transversale, sur sol sec/mouillé) ou le comportement.

En outre, la recherche d'une masse de pneumatique la plus faible possible est une préoccupation constante du concepteur de pneumatique, afin de réduire la masse du véhicule sur lequel est monté le pneumatique. Réduire la masse des pneumatiques permet aussi de diminuer l'inertie de ceux-ci, et en conséquence de réduire la consommation du véhicule. Une diminution de masse des pneumatiques permet aussi d'alléger le véhicule par le biais d'une optimisation fine de chaque composant le constituant, par exemple du système de freinage car il y a moins d'inertie et de masse à freiner. Une diminution de masse permet aussi de réduire la quantité de matières premières nécessaires à la fabrication du pneumatique, donc de préserver des ressources naturelles. En outre cette diminution de masse du pneumatique ne doit pas dégrader son endurance.

Les inventeurs se sont donnés pour objectif d'améliorer, par rapport à un pneumatique de tourisme de l'état de la technique tel que précédemment décrit, le compromis entre la résistance au roulement et des performances antagonistes telles que les divers types d'adhérence (longitudinale/transversale, sur sol sec/mouillé) et le comportement, et tout en diminuant la masse sans dégradation de l'endurance.

On connait de l'état de la technique des pneumatiques tels que décrits dans FR3041568, US2015314647 et US2014116587.

Ce but a été atteint, selon l'invention, par un pneumatique pour véhicule de tourisme comprenant :
- une bande de roulement, destinée à entrer en contact avec un sol par l'intermédiaire d'une surface de roulement et comprenant des éléments en relief s'étendant radialement vers l'extérieur à partir d'une surface de fond jusqu'à la surface de roulement sur une hauteur radiale Hₛ, mesurée dans un plan équatorial XZ du pneumatique, au plus égale à 8 mm,
- les éléments en relief ayant un volume total V_{P} et étant séparés par des creux ayant un volume total Vc, une partie des creux étant des creux principaux, ayant chacun une largeur moyenne au moins égale à 6 mm et l'ensemble des creux principaux ayant un volume total V_{CP},
- la bande de roulement ayant un taux d'entaillement volumique T_{EV}, défini comme le rapport entre le volume total Vc des creux et la somme du volume total Vc des creux et du volume total V_{P} des éléments en relief, au moins égal à 22% et au plus égal à 30%,
- la bande de roulement comprenant en outre au moins un mélange élastomérique ayant une température de transition vitreuse T_{g}, une dureté Shore A et une perte dynamique tgδ à 23°C,
- une armature de frettage, radialement intérieure à la bande de roulement, comprenant au moins une couche de frettage comprenant des renforts textiles enrobés dans un mélange élastomérique, parallèles entre eux et formant, avec une direction circonférentielle XX' du pneumatique, un angle A_{F}, mesuré dans le plan équatorial XZ du pneumatique, au plus égal à 5°en valeur absolue,
- une armature de travail, radialement intérieure à l'armature de frettage, comprenant au moins deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20° et au plus égale à 40°,
- une armature de carcasse comprenant au moins une couche de carcasse comprenant des renforts textiles enrobés dans un matériau élastomérique, parallèles entre eux et formant, avec la direction circonférentielle XX' du pneumatique, un angle Ac au moins égal à 85° et au plus égal 95°,
- la hauteur radiale Hₛ des éléments en relief de la bande de roulement étant au moins égale à 5.0 mm,
- le volume total V_{CP} de l'ensemble des creux principaux de la bande de roulement étant au moins égal à 80% du volume total Vc des creux de la bande de roulement,
- et le au moins un mélange élastomérique constitutif de la bande de roulement ayant une température de transition vitreuse T_{g} au moins égale à -22°C et au plus égale à -5°C, une dureté Shore A au moins égale à 52 et au plus égale à 57, et une perte dynamique tgδ à 23°C au moins égale à 0.13 et au plus égale à 0.39
- les renforts métalliques de chacune des au moins deux couches de travail de l'armature de travail étant des monofilaments en acier ayant une section S inscrite dans un cercle de diamètre D et dont la plus petite dimension Dmin est au moins égale à 0.20 mm et au plus égale à 0.5 mm,
- les renforts métalliques de chacune des au moins deux couches de travail de l'armature de travail étant répartis selon une densité d_{T} au moins égale à 100 fils/dm et au plus égale à 200 fils /dm,
- et chaque couche de travail de l'armature de travail ayant une épaisseur radiale moyenne E_{T} au moins égale à D+0.1 mm et au plus égale à D+0.6 mm, avec D diamètre du cercle circonscrit à la section S du renfort métallique de type monofilament.

Une bande de roulement selon l'invention est donc caractérisée géométriquement par une hauteur radiale H_{S} de ses éléments en relief limitée, comprise entre 5 mm et 8 mm, et un volume total V_{CP} de l'ensemble des creux principaux plutôt élevé, au moins égal à 80% du volume total V_{C} des creux. Au niveau du matériau, la bande de roulement selon l'invention est caractérisée par un mélange élastomérique ayant une température de transition vitreuse, comprise dans un large intervalle, entre -22°C et -5°C, ayant une dureté plutôt basse, avec une dureté Shore A comprise entre 52 et 57, et ayant une assez basse hystérèse, avec une perte dynamique tgδ à 23°C au moins égale à 0.13 et au plus égale à 0.39. Ce mélange élastomérique est également caractérisé par une perte à 60°C au moins égale à 12% et au plus égale à 30%.

Un mélange élastomérique de bande de roulement à basse hystérèse contribue à une faible résistance au roulement, cet effet étant renforcé par la hauteur radiale limitée des éléments en relief de bande de roulement.

Par ailleurs, un mélange élastomérique de bande de roulement à basse dureté, donc plutôt mou, permet d'augmenter l'adhérence sur sol mouillé mais dégrade le comportement. Toutefois l'impact négatif du mélange élastomérique mou sur le comportement est au moins en partie compensé par une faible hauteur radiale des éléments en relief de bande de roulement.

Concernant la température de transition vitreuse T_{g}, une plage de valeurs assez large permet d'ajuster le compromis entre la résistance au roulement et l'adhérence sur sol mouillé : une température de transition vitreuse T_{g} plutôt basse est favorable à la résistance au roulement, alors qu'une température de transition vitreuse T_{g} plutôt élevée est favorable à l'adhérence.

Enfin, un volume total V_{CP} de l'ensemble des creux principaux élevé contribue à une bonne adhérence sur sol mouillé, en particulier avec une forte hauteur d'eau, grâce à son effet de stockage et d'évacuation de l'eau.

En ce qui concerne l'armature de travail, les renforts métalliques de chacune des au moins deux couches de travail de l'armature de travail sont des monofilaments en acier, ayant une section S inscrite dans un cercle de diamètre D et dont la plus petite dimension Dmin est au moins égale à 0.20 mm et au plus égale à 0.5 mm.

Les monofilaments sont, par définition, des fils métalliques unitaires. Les monofilaments peuvent avoir toute forme de section, préférentiellement circulaire voire oblongue. Pour un monofilament ayant une section circulaire S de diamètre D, la plus grande dimension Dmax de la section circulaire S correspond au diamètre D. Une section oblongue est avantageuse par rapport une section circulaire de même plus petite dimension Dmin, car elle a une inertie de flexion plus élevée, ce qui confère au monofilament une meilleure résistance au flambement.

Les monofilaments peuvent être rectilignes ou non. Ils peuvent être préformés, de forme sinusoïdale, zigzag, ondulée ou suivant une spirale.

Les monofilaments sont en acier, de préférence en acier au carbone tel que ceux utilisés dans les câbles de type "steel cords" ; mais il est bien entendu possible d'utiliser d'autres aciers, par exemple des aciers inoxydables, ou d'autres alliages. Lorsqu'un acier au carbone est utilisé, sa teneur en carbone (% en poids d'acier) est de préférence comprise dans un domaine de 0,8% à 1,2%. L'invention s'applique en particulier à des aciers du type « steel cord » à très haute résistance « SHT » (« Super High Tensile »), ultra-haute résistance « UHT » (« Ultra High Tensile ») ou « MT » (« Mega Tensile »). Les renforts en acier au carbone ont alors une résistance à la rupture en traction Rm qui est de préférence supérieure à 3000 MPa, plus préférentiellement supérieure à 3500 MPa. Leur allongement total à la rupture At est de préférence supérieur à 2,0%.

L'acier utilisé, qu'il s'agisse en particulier d'un acier au carbone ou d'un acier inoxydable, peut être lui-même revêtu d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que, lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Par ailleurs les renforts métalliques de chacune des au moins deux couches de travail de l'armature de travail sont répartis selon une densité d_{T} au moins égale à 100 fils/dm et au plus égale à 200 fils /dm.

Par densité, on entend le nombre moyen de monofilaments sur une largeur de couche de travail de 10 cm, cette largeur étant prise perpendiculairement à la direction des monofilaments de la couche de travail considérée. La distance entre deux monofilaments consécutifs ou pas peut être fixe ou variable. La pose des monofilaments en fabrication peut être effectuée par couche, par bandelette ou de façon unitaire. Une densité de monofilaments de chaque couche de travail au moins égale à 100 fils par dm et au plus égale à 200 fils par dm garantit une résistance à rupture en fatigue des monofilaments satisfaisante et une bonne tenue au cisaillement des mélanges élastomériques situés entre les filaments.

En outre la résistance au flambement d'un monofilament dépend également de la résistance des monofilaments axialement adjacents, un début de flambement pouvant en entraîner un autre par l'effet d'une répartition de la charge autour du monofilament qui flambe. Pour obtenir une performance en endurance améliorée, il peut être avantageux non seulement d'observer des conditions de diamètre de section et de densité des monofilaments, mais aussi de remplir une condition portant sur la résistance à rupture Rc définie par Rc = Rm*S*d_{T}, où Rm est la résistance à la rupture en traction des monofilaments en MPa, S la section des monofilaments en mm² et d_{T} la densité de monofilaments de la couche de travail considérée, en nombre de monofilaments par dm. Avantageusement la résistance à rupture R_{C} de chaque couche de travail doit être au moins égale à 30 000 N/dm.

Les renforts métalliques selon l'invention étant des monofilaments, chaque couche de travail de l'armature de travail a une épaisseur radiale moyenne E_{T} au moins égale à D+0.1 mm et au plus égale à D+0.6 mm, avec D diamètre du cercle circonscrit à la section S du renfort métallique de type monofilament. Un monofilament étant intercalé entre une épaisseur de mélange élastomérique radialement intérieure et une épaisseur de mélange élastomérique radialement extérieure, ces deux épaisseurs étant le plus souvent sensiblement égales, l'épaisseur radiale moyenne E_{T} de la couche de travail est égale à la somme du diamètre D et des deux épaisseurs de mélange élastomérique respectivement radialement intérieure et radialement extérieure. Par conséquent, dans le cas d'une répartition sensiblement symétrique du mélange élastomérique respectivement radialement à l'intérieur et radialement à l'extérieur des monofilaments, l'intervalle d'épaisseur radiale moyenne E_{T} de la couche de travail spécifié implique que chaque épaisseur de mélange élastomérique respectivement radialement intérieure et radialement extérieure est au moins égale à 0.05 mm et au plus égale à 0.3 mm. Cette épaisseur est sensiblement inférieure à celle obtenue à des renforts métalliques de type câbles, constitués d'un assemblage de plusieurs fils unitaires, d'où un gain en masse sur les couches de travail et donc sur le pneumatique.

En conclusion, la combinaison des caractéristiques essentielles de l'invention, concernant la bande de roulement et l'armature de travail, permet bien d'apporter un avantage en résistance au roulement sans dégrader l'adhérence et le comportement. Elle permet enfin une diminution de la masse du pneumatique.

Préférentiellement la hauteur radiale H_{S} des éléments en relief de la bande de roulement est au moins égale à 5.5 mm et au plus égale à 7.5 mm, de préférence au plus égale à 7 mm. Cette plage de valeurs de hauteur radiale permet d'obtenir un compromis satisfaisant entre les performances de résistance au roulement, de comportement et d'adhérence sur sol mouillé.

Avantageusement le taux d'entaillement volumique T_{EV} de la bande de roulement est au plus égal à 28%. Préférentiellement le taux d'entaillement volumique T_{EV} de la bande de roulement est au moins égal à 25% et au plus égal à 27%. Cette plage de valeurs de taux d'entaillement permet de garantir une bonne performance en adhérence sur sol mouillé, grâce à un taux d'entaillement de bande de roulement suffisamment élevé pour compenser une hauteur de sculpture limitée.

Encore avantageusement le volume total V_{CP} de l'ensemble des creux principaux de la bande de roulement est au moins égal à 85%, de préférence au moins égal à 88%, du volume total Vc des creux de la bande de roulement. Le plus souvent, les creux principaux sont majoritairement circonférentiels, ce qui implique que les éléments en relief de la bande roulement sont disposés principalement circonférentiellement et constituent des nervures circonférentielles, pouvant être continues ou discontinues. Dans le cas de nervures discontinues, les éléments en relief sont alors constitués de blocs séparés par des incisions, c'est-à-dire des creux d'épaisseur très faibles. Lorsque le pneumatique est écrasé et/ou en roulage sous un couple moteur, les blocs, constituant les nervures discontinues, entrent en contact deux à deux circonférentiellement, ce qui limite leurs déformations circonférentielles par effet de Poisson, et corrélativement leur dissipation thermique, d'où une diminution de la résistance au roulement.

Préférentiellement le au moins un mélange élastomérique constitutif de la bande de roulement a une température de transition vitreuse T_{g} au moins égale à -16°C et au plus égale à -8°C. Cette plage de valeurs de température de transition vitreuse T_{g} permet d'atteindre un compromis satisfaisant entre la résistance au roulement et l'adhérence sur sol mouillé, avec une température de transition vitreuse T_{g} suffisamment basse favorable à la résistance au roulement, et suffisamment élevée favorable à l'adhérence sur sol mouillé.

Conformément à l'invention, le au moins un mélange élastomérique constitutif de la bande de roulement a une dureté Shore A au moins égale à 52 et au plus égale à 57. Ces plages de valeurs de dureté Shore A permettent d'atteindre un compromis satisfaisant entre le comportement et l'adhérence, avec une dureté Shore A suffisamment basse (mélange élastomérique mou) favorable à l'adhérence, et suffisamment élevée (mélange élastomérique rigide) favorable au comportement.

Encore avantageusement le au moins un mélange élastomérique constitutif de la bande de roulement a une perte dynamique tgδ à 23°C au plus égale à 0.27. Cette limite supérieure de la perte dynamique tgδ, donc de l'hystérèse, contribue significativement à la diminution de la résistance au roulement.

Selon un mode de réalisation préféré de l'armature de frettage, les renforts textiles de la au moins une couche de frettage de l'armature de frettage comprennent un polyamide aromatique, tel que l'aramide. L'aramide a un module d'extension élevé et donc une faible déformabilité, ce qui est favorable à une fonction de frettage du pneumatique.

Selon une première variante du mode de réalisation préféré de l'armature de frettage, les renforts textiles de la au moins une couche de frettage de l'armature de frettage comprennent une combinaison d'un polyamide aromatique, tel que l'aramide, et d'un polyamide aliphatique, tel que le nylon. De tels renforts sont également appelés renforts hybrides et présentent l'avantage d'avoir un comportement mécanique en extension dit « bi-module », caractérisé par un bas module d'extension, celui du nylon, et donc une grande déformabilité, pour de petits allongements, et un module d'extension élevé et donc une plus faible déformabilité, pour de grands allongements.

Selon une deuxième variante du mode de réalisation préféré de l'armature de frettage, les renforts textiles de la au moins une couche de frettage de l'armature de frettage comprennent une combinaison d'un polyamide aromatique, tel que l'aramide, et d'un polyester, tel que le polyéthylène téréphtalate (PET). De tels renforts sont également des renforts hybrides qui présentent les mêmes avantages que ceux décrits précédemment.

Selon un mode de réalisation préféré de l'armature de travail, les renforts métalliques de chacune des au moins deux couches de travail de l'armature de travail forment, avec la direction circonférentielle XX' du pneumatique, un angle (A_{T1}, A_{T2}), mesuré dans le plan équatorial XZ du pneumatique, dont la valeur absolue est au moins égale à 20° et au plus égale à 30°.

Selon un mode de réalisation préféré des renforts métalliques de couche de travail, les renforts métalliques de chacune des au moins deux couches de travail de l'armature de travail sont des monofilaments ayant une section S dont la plus petite dimension Dmin est au moins égale à 0.30 mm et au plus égale à 0.4 mm, de préférence au moins égale à 0.32 mm et au plus égale à 0.36 mm. Cet intervalle de valeurs conduit à un compromis optimal entre le gain de masse et la tenue au flambement des monofilaments des couches de travail.

Selon une variante du mode de réalisation préféré des renforts métalliques de couche de travail, les renforts métalliques de chacune des au moins deux couches de travail de l'armature de travail sont des monofilaments en acier dont la résistance à la rupture en traction Rm est au moins égale à 3000 MPA, de préférence au moins égale à 3500 MPa. Ces valeurs minimales de résistance à la rupture en traction Rm correspondent à des monofilaments en acier au carbone avec une teneur en carbone comprise entre 0,8% et 1,2% (% en poids d'acier).

Préférentiellement les renforts métalliques de chacune des au moins deux couches de travail de l'armature de travail sont répartis selon une densité d_{T} au moins égale à 120 fils/dm et au plus égale à 180 fils /dm. Cet intervalle de valeurs de densité garantit une endurance améliorée du mélange élastomérique, intercalé entre les monofilaments et soumis à un cisaillement, et l'endurance mécanique des monofilaments en traction et compression.

Selon un mode de réalisation préféré de chaque couche de travail, chaque couche de travail de l'armature de travail a une épaisseur radiale moyenne E_{T} au moins égale à D+0.3 mm et au plus égale à D+0.5 mm, avec D diamètre du cercle circonscrit à la section S du renfort métallique de type monofilament. Par conséquent, dans le cas d'une répartition sensiblement symétrique du mélange élastomérique respectivement radialement à l'intérieur et radialement à l'extérieur des monofilaments, l'intervalle d'épaisseur radiale moyenne E_{T} de la couche de travail spécifié implique que chaque épaisseur de mélange élastomérique respectivement radialement intérieure et radialement extérieure au droit d'un monofilament est au moins égale à 0.15 mm et au plus égale à 0.25 mm.

L'armature de carcasse comprenant généralement au moins une couche de carcasse comprenant des renforts le plus souvent en matériau textile, enrobés dans un matériau élastomérique et parallèles entre eux, elle comprend de préférence soit une couche de carcasse unique soit deux couches de carcasse. Encore préférentiellement, les renforts textiles de couche de carcasse sont en polyéthylène téréphtalate (PET).

Selon un mode de réalisation particulier, l'armature de renforcement du pneumatique a une architecture de type « shoulder lock », caractérisée par une armature de carcasse comprenant une couche de carcasse dite retournée, c'est-à-dire s'enroulant dans chaque bourrelet du pneumatique autour d'un élément de renforcement circonférentiel ou tringle pour former un retournement dont l'extrémité libre vient en contact avec la face radialement intérieure de l'armature de sommet.

Avantageusement une couche intermédiaire comprenant au moins un mélange élastomérique est positionnée radialement à l'intérieur de la bande de roulement et radialement à l'extérieur de l'armature de frettage.

La couche intermédiaire a avantageusement une épaisseur radiale E au moins égale à 0.3 mm et au plus égale à 4.0 mm.

Le au moins un mélange élastomérique, constitutif de la couche intermédiaire, a encore avantageusement une dureté Shore A au moins égale à 59 et au plus égale à 69 et une perte dynamique tgδ à 23°C au moins égale à 0.08 et au plus égale à 0.20. Ce mélange élastomérique a en outre une perte à 60°C au moins égale à 8% et au plus égale à 16%. Un tel mélange élastomérique de couche intermédiaire contribue à une faible résistance au roulement.

Selon une variante avantageuse de la sculpture de la bande de roulement, l'agencement des éléments en relief de la bande de roulement est dissymétrique par rapport au plan équatorial XZ du pneumatique, de telle sorte que le taux d'entaillement volumique T_{EV1} de la moitié de bande roulement destinée à être montée du côté intérieur du véhicule est au moins égal au taux d'entaillement volumique T_{EV2} de la moitié de bande roulement destinée à être montée du côté extérieur du véhicule.

L'invention est illustrée par les figures 1 à 3, non représentées à l'échelle et décrites ci-après :
- Figure 1: demi-coupe méridienne d'un pneumatique selon l'invention.
- Figure 2: coupe en perspective d'un pneumatique selon l'invention.
- Figure 3 : bande de roulement type d'un pneumatique selon l'invention

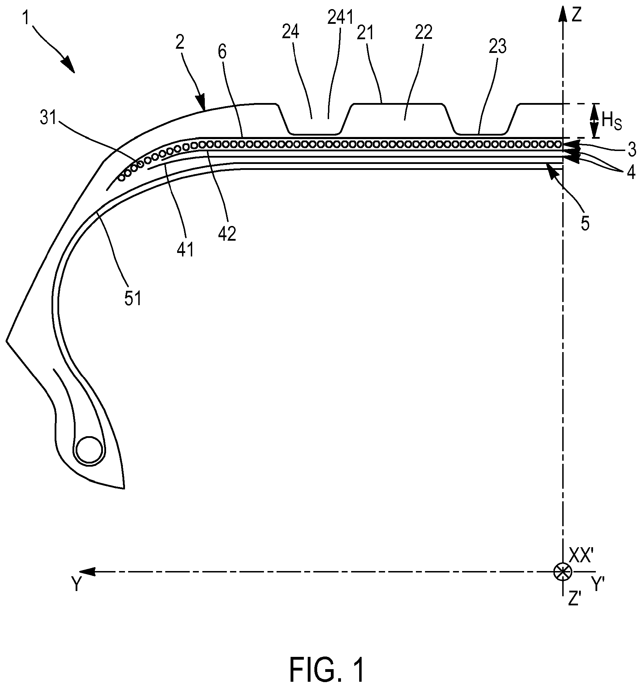

La figure 1 représente une demi-coupe méridienne, dans un plan méridien YZ, d'un pneumatique 1 pour véhicule de tourisme selon l'invention. Le pneumatique 1 comprend, le plus radialement à l'extérieur, une bande de roulement 2, destinée à entrer en contact avec un sol par l'intermédiaire d'une surface de roulement 21 et comprenant des éléments en relief 22 s'étendant radialement vers l'extérieur à partir d'une surface de fond 23 jusqu'à la surface de roulement 21 sur une hauteur radiale H_{S}, mesurée dans un plan équatorial XZ du pneumatique, au moins égale à 5 mm et au plus égale à 8 mm. Les éléments en relief 22 ont un volume total V_{P} et sont séparés par des creux 24 ayant un volume total Vc. Une partie des creux 24 sont des creux principaux 241, ayant chacun une largeur moyenne au moins égale à 6 mm et l'ensemble des creux principaux 241 ayant un volume total V_{CP} au moins égal à 80% du volume total V_{C} des creux 24 de la bande de roulement 2. La bande de roulement 2 a un taux d'entaillement volumique T_{EV}, défini comme le rapport entre le volume total Vc des creux 24 et la somme du volume total Vc des creux 24 et du volume total Vp des éléments en relief 22, au moins égal à 22% et au plus égal à 30%. La bande de roulement 2 est constituée par un mélange élastomérique ayant une température de transition vitreuse T_{g} au moins égale à -22°C et au plus égale à - 5°C, une dureté Shore A au moins égale à 45 et au plus égale à 65 et une perte dynamique tgδ à 23°C au moins égale à 0.13 et au plus égale à 0.39. Le pneumatique 1 comprend en outre, selon un mode particulier de réalisation de l'invention, une couche intermédiaire 6 comprenant un mélange élastomérique et positionnée radialement à l'intérieur de la bande de roulement 2. Le pneumatique 1 comprend également une armature de frettage 3, radialement intérieure à la couche intermédiaire 6 et comprenant une couche de frettage 31, une armature de travail 4, radialement intérieure à l'armature de frettage 3 et comprenant deux couches de travail (41, 42) radialement superposées, et, enfin, une armature de carcasse 5 comprenant une couche de carcasse 51.

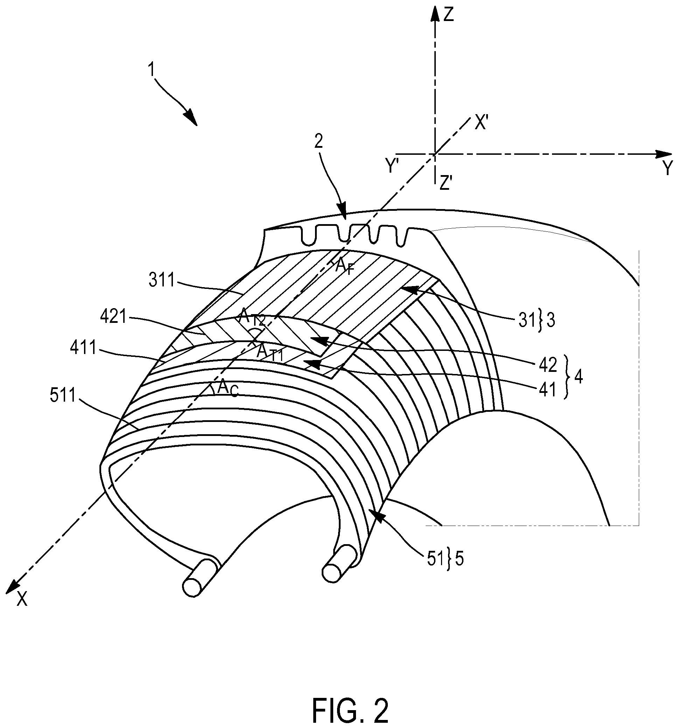

La figure 2 représente une coupe en perspective d'un pneumatique selon l'invention. La couche de frettage 31 comprend des renforts textiles 311 enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue. Les deux couches de travail (41, 42) comprennent chacune des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20° et au plus égale à 40°. La couche de carcasse 51 comprend des renforts textiles 511 enrobés dans un matériau élastomérique, parallèles entre eux et formant, avec la direction circonférentielle XX' du pneumatique, un angle Ac au moins égal à 85° et au plus égal 95°.

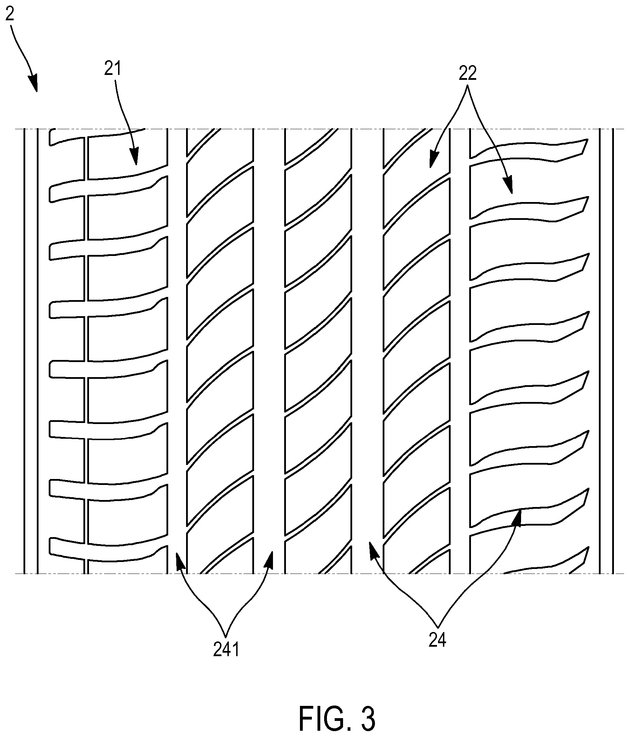

La figure 3 représente une bande de roulement d'un pneumatique selon l'invention en vue de dessus. La bande de roulement 2, destinée à entrer en contact avec un sol par l'intermédiaire d'une surface de roulement 21, comprend des éléments en relief 22, ayant un volume total V_{P}, séparés par des creux 24, ayant volume total Vc. Une partie des creux sont des creux principaux 241, ayant chacun une largeur moyenne au moins égale à 6 mm et l'ensemble des creux principaux 241 ayant un volume total V_{CP}. Dans le cas représenté, les creux principaux 241 sont circonférentiels. La bande de roulement 2 a un taux d'entaillement volumique T_{EV}, défini comme le rapport entre le volume total Vc des creux 24 et la somme du volume total V_{C} des creux 24 et du volume total V_{P} des éléments en relief 22, au moins égal à 22% et au plus égal à 30%. De plus le volume total V_{CP} de l'ensemble des creux principaux 241 de la bande de roulement 2 est au moins égal à 80% du volume total V_{C} des creux 24 de la bande de roulement 2.

L'invention a été plus particulièrement étudiée pour un pneumatique de tourisme de dimension 225/45R17. Un premier pneumatique de référence R1 a été comparé à un premier pneumatique I1, et un deuxième pneumatique de référence R2 a été comparé à un premier pneumatique I2 selon l'invention.

La bande de roulement du premier pneumatique de référence R1 comprend des éléments en relief s'étendant radialement sur une hauteur radiale H_{S} égale à 7.5 mm. Le taux d'entaillement volumique T_{EV} de la bande de roulement est égal à 23%. Le mélange élastomérique constitutif de la bande de roulement a une température de transition vitreuse T_{g} égale à -5°C, une dureté Shore A égale à 67 et une perte dynamique tgδ à 23°C égale à 0.44. Le premier pneumatique de référence R1 comprend en outre une couche intermédiaire radialement à l'intérieur de la bande de roulement et radialement à l'extérieur de l'armature de frettage, constituée par un mélange élastomérique ayant une dureté Shore A égale à 66 et une perte dynamique tgδ à 23°C égale à 0.13. L'armature de frettage comprend une couche de frettage dont les renforts textiles sont en nylon de titre 140/2 (assemblage de 2 surtors de 140 tex chacun, 1 tex étant la masse en g de 1000 m de fil) et répartis dans la couche de frettage avec une densité de 98 fils/dm. L'armature de travail comprend deux couches de travail radialement superposées. Les renforts métalliques de formule 2.30 (assemblage torsadé de deux fils métalliques ayant chacun un diamètre égal à 0.30 mm) de la couche de travail radialement la plus intérieure et de la couche de travail radialement la plus extérieure sont répartis à un pas égal à 1.05 mm et forment, avec la direction circonférentielle XX' du pneumatique, un angle (A_{T1}, A_{T2}), mesuré dans le plan équatorial XZ du pneumatique, respectivement égal à +25° et -25°. L'épaisseur radiale moyenne E_{T} de chaque couche de travail est égale à 0.9 mm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La bande de roulement du premier pneumatique I1 comprend des éléments en relief s'étendant radialement sur une hauteur radiale H_{S} égale à 7 mm. Le taux d'entaillement volumique T_{EV} de la bande de roulement est égal à 26.5%. Le volume total V_{CP} de l'ensemble des creux principaux de la bande de roulement est égal à 81% du volume total Vc des creux de la bande de roulement. Le mélange élastomérique constitutif de la bande de roulement a une température de transition vitreuse T_{g} égale à -12°C, une dureté Shore A égale à 63.5 et une perte dynamique tgδ à 23°C égale à 0.38. Le premier pneumatique I1 comprend en outre une couche intermédiaire, radialement à l'intérieur de la bande de roulement et radialement à l'extérieur de l'armature de frettage, constituée par un mélange élastomérique ayant une dureté Shore A égale à 63 et une perte dynamique tgδ à 23°C égale à 0.15. L'armature de frettage comprend une couche de frettage dont les renforts textiles sont en nylon de titre 140/2 (assemblage de 2 surtors de 140 tex chacun, 1 tex étant la masse en g de 1000 m de fil) et répartis dans la couche de frettage avec une densité de 98 fils/dm. L'armature de travail comprend deux couches de travail radialement superposées. Les renforts métalliques de formule 1.32 (monofilament ayant chacun un diamètre égal à 0.32 mm) de la couche de travail radialement la plus intérieure et de la couche de travail radialement la plus extérieure sont répartis à un pas égal à 0.70 mm et forment, avec la direction circonférentielle XX' du pneumatique, un angle (A_{T1}, A_{T2}), mesuré dans le plan équatorial XZ du pneumatique, respectivement égal à +25° et -25°. L'épaisseur radiale moyenne E_{T} de chaque couche de travail est égale à 0.83 mm. Le pas entre deux monofilaments consécutifs, c'est-à-dire la distance entre leurs lignes moyennes respectives, est égal à 0.70 mm, donc la densité de monofilaments est égale à 1/0.70= 1.42 renfort/mm, soit 142 renforts/dm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La bande de roulement du deuxième pneumatique de référence R2 comprend des éléments en relief s'étendant radialement sur une hauteur radiale H_{S} égale à 7.5 mm. Le taux d'entaillement volumique T_{EV} de la bande de roulement est égal à 23%. Le mélange élastomérique constitutif de la bande de roulement a une température de transition vitreuse T_{g} égale à -9°C, une dureté Shore A égale à 65 et une perte dynamique tgδ à 23°C égale à 0.32. Le deuxième pneumatique de référence R2 comprend en outre une couche intermédiaire, radialement à l'intérieur de la bande de roulement et radialement à l'extérieur de l'armature de frettage, constituée par un mélange élastomérique ayant une dureté Shore A égale à 65 et une perte dynamique tgδ à 23°C égale à 0.11. L'armature de frettage comprend une couche de frettage dont les renforts textiles sont en nylon de titre 140/2 (assemblage de 2 surtors de 140 tex chacun, 1 tex étant la masse en g de 1000 m de fil) et répartis dans la couche de frettage avec une densité de 98 fils/dm. L'armature de travail comprend deux couches de travail radialement superposées. Les renforts métalliques de formule 2.30 (assemblage torsadé de deux fils métalliques ayant chacun un diamètre égal à 0.30 mm) de la couche de travail radialement la plus intérieure et de la couche de travail radialement la plus extérieure sont répartis à un pas égal à 1.05 mm et forment, avec la direction circonférentielle XX' du pneumatique, un angle (A_{T1}, A_{T2}), mesuré dans le plan équatorial XZ du pneumatique, respectivement égal à +25° et -25°. L'épaisseur radiale moyenne E_{T} de chaque couche de travail est égale à 0.90 mm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La bande de roulement du deuxième pneumatique I2 selon l'invention comprend des éléments en relief s'étendant radialement sur une hauteur radiale H_{S} égale à 7mm. Le taux d'entaillement volumique T_{EV} de la bande de roulement est égal à 26.5%. Le volume total V_{CP} de l'ensemble des creux principaux de la bande de roulement est égal à 90% du volume total Vc des creux de la bande de roulement. Le mélange élastomérique constitutif de la bande de roulement a une température de transition vitreuse T_{g} égale à -14°C, une dureté Shore A égale à 52 et une perte dynamique tgδ à 23°C égale à 0.18. Le deuxième pneumatique I2 selon l'invention comprend en outre une couche intermédiaire, radialement à l'intérieur de la bande de roulement et radialement à l'extérieur de l'armature de frettage, constituée par un mélange élastomérique ayant une dureté Shore A égale à 60 et une perte dynamique tgδ à 23°C égale à 0.10. L'armature de frettage comprend une couche de frettage dont les renforts textiles comprennent une combinaison de fils en aramide et de fils en nylon de titre A167/N140 (assemblage d'un surtors en aramide de 167 tex et d'un surtors en nylon de 140 tex) avec une torsion de 290 tours/m et répartis dans la couche de carcasse avec une densité de 98 fils/dm. L'armature de travail comprend deux couches de travail radialement superposées. Les renforts métalliques de formule 1.32 (monofilament ayant chacun un diamètre égal à 0.32 mm) de la couche de travail radialement la plus intérieure et de la couche de travail radialement la plus extérieure sont répartis à un pas égal à 0.70 mm et forment, avec la direction circonférentielle XX' du pneumatique, un angle (A_{T1}, A_{T2}), mesuré dans le plan équatorial XZ du pneumatique, respectivement égal à +25° et -25°. L'épaisseur radiale moyenne E_{T} de chaque couche de travail est égale à 0.83 mm. Le pas entre deux monofilaments consécutifs, c'est-à-dire la distance entre leurs lignes moyennes respectives, est égal à 0.70 mm, donc la densité de monofilaments est égale à 1/0.70= 1.42 renfort/mm, soit 142 renforts/dm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La masse du premier pneumatique de référence R1 est égale à 9.1 kg, et la masse du premier pneumatique I1 est égale à 8.5 kg. La masse du deuxième pneumatique de référence R2 est égale à 9.1 kg, et la masse du deuxième pneumatique I2 selon l'invention est égale à 8.5 kg.

Les pneumatiques I1 et R1 d'une part, et I2 et R2 d'autre part ont été soumis à divers tests et mesures comparatifs. Les résultats, présentés dans le tableau 1 ci-dessous, sont exprimés respectivement pour I1 par rapport R1 (référence ou base 100), et pour I2 par rapport à R2 (référence ou base 100):

**Tableau 1**

| Performance | Ecart de performance du pneumatique I1/ pneumatique R1 | Ecart de performance du pneumatique I2/ pneumatique R2 |
|---|---|---|
| Résistance au roulement | -1.2 kg/t | -1.3 kg/t |
| Adhérence longitudinale (distance de freinage) sur sol mouillé (base 100) | 111 | 100 |
| Adhérence longitudinale (distance de freinage) sur sol sec (base 100) | 102 | 99 |
| Adhérence transversale (temps pour réaliser un tour de circuit) sur sol mouillé | -1.3 s | +5 s |
| Rigidité latérale à faible accélération (ou rigidité de dérive) (base 100) | 89 | 96 |
| Masse | -0.6 kg | -0.6 kg |

Par rapport au pneumatique R1 de l'état de la technique pris en référence, le pneumatique I1 présente une diminution de la résistance au roulement de 1.2 kg/t, une amélioration en adhérence longitudinale (significative sur sol mouillé mais plus faible sur sol sec), une performance améliorée en adhérence transversale sur sol mouillé (avec un temps pour réaliser un tour de circuit réduit de 1.3 s, pour un temps de référence au tour égal à 103 s), et une diminution de la rigidité latérale à faible accélération impliquant une légère dégradation du comportement. On note également un gain en performance masse, c'est-à-dire une réduction de la masse égale à 0.6 kg pour le pneumatique I1 par rapport au pneumatique R1.

Par rapport au pneumatique R2 de l'état de la technique pris en référence, le pneumatique I2 selon l'invention présente une diminution de la résistance au roulement de 1.3 kg/t, une performance équivalente en adhérence longitudinale sur sol mouillé et sur sol sec, une performance légèrement dégradée en adhérence transversale sur sol mouillé (avec un temps pour réaliser un tour de circuit augmenté de 5 s, pour un temps de référence au tour égal à 103 s), et une faible diminution de la rigidité latérale à faible accélération impliquant un comportement sensiblement équivalent. On note également un gain en performance masse, c'est-à-dire une réduction de la masse égale à 0.6 kg pour le pneumatique I2 par rapport au pneumatique R2.

## Revendications

1. Pneumatique (1) pour véhicule de tourisme comprenant :
- une bande de roulement (2), destinée à entrer en contact avec un sol par l'intermédiaire d'une surface de roulement (21) et comprenant des éléments en relief (22) s'étendant radialement vers l'extérieur à partir d'une surface de fond (23) jusqu'à la surface de roulement (21) sur une hauteur radiale H_{S}, mesurée dans un plan équatorial XZ du pneumatique, au plus égale à 8 mm,
- les éléments en relief (22) ayant un volume total V_{P} et étant séparés par des creux (24) ayant un volume total Vc, une partie des creux (24) étant des creux principaux (241), ayant chacun une largeur moyenne au moins égale à 6 mm et l'ensemble des creux principaux (241) ayant un volume total V_{CP},
- la bande de roulement (2) ayant un taux d'entaillement volumique T_{EV}, défini comme le rapport entre le volume total Vc des creux (24) et la somme du volume total Vc des creux (24) et du volume total V_{P} des éléments en relief (22), au moins égal à 22% et au plus égal à 30%,
- la bande de roulement (2) comprenant en outre au moins un mélange élastomérique ayant une température de transition vitreuse T_{g}, déterminée sur un viscoanalyseur selon la norme ASTM D 5992-96, une dureté Shore A, mesurée conformément aux normes DIN 53505 ou ASTM 2240, et une perte dynamique tgδ à 23°C, déterminée sur le viscoanalyseur à une amplitude crête-crête égale à 0,7 MPa et une fréquence égale à 10 Hz,
- une armature de frettage (3), radialement intérieure à la bande de roulement (2), comprenant au moins une couche de frettage (31) comprenant des renforts textiles (311) enrobés dans un mélange élastomérique, parallèles entre eux et formant, avec une direction circonférentielle XX' du pneumatique, un angle A_{F}, mesuré dans le plan équatorial XZ du pneumatique, au plus égal à 5°en valeur absolue,
- une armature de travail (4), radialement intérieure à l'armature de frettage (3), comprenant au moins deux couches de travail (41, 42), radialement superposées, comprenant des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20° et au plus égale à 40°,
- une armature de carcasse (5) comprenant au moins une couche de carcasse (51) comprenant des renforts textiles (511) enrobés dans un matériau élastomérique, parallèles entre eux et formant, avec la direction circonférentielle XX' du pneumatique, un angle Ac au moins égal à 85° et au plus égal 95°,
la hauteur radiale H_{S} des éléments en relief (22) de la bande de roulement (2) étant au moins égale à 5.0 mm, le volume total V_{CP} de l'ensemble des creux principaux (241) de la bande de roulement (2) étant au moins égal à 80% du volume total V_{C} des creux (24) de la bande de roulement (2), **caractérisé en ce que** le au moins un mélange élastomérique constitutif de la bande de roulement (2) a une température de transition vitreuse T_{g} au moins égale à -22°C et au plus égale à -5°C, une dureté Shore A au moins égale à 52 et au plus égale à 57 et une perte dynamique tgδ à 23°C au moins égale à 0.13 et au plus égale à 0.39, **en ce que** les renforts métalliques (411, 421) de chacune des au moins deux couches de travail (41, 42) de l'armature de travail (4) sont des monofilaments en acier ayant une section S inscrite dans un cercle de diamètre D et dont la plus petite dimension Dmin est au moins égale à 0.20 mm et au plus égale à 0.5 mm, **en ce que** les renforts métalliques (411, 421) de chacune des au moins deux couches de travail (41, 42) de l'armature de travail (4) sont répartis selon une densité d_{T} au moins égale à 100 fils/dm et au plus égale à 200 fils /dm **et en ce que** chaque couche de travail (41, 42) de l'armature de travail (4) a une épaisseur radiale moyenne E_{T} au moins égale à D+0.1 mm et au plus égale à D+0.6 mm, avec D diamètre du cercle circonscrit à la section S du renfort métallique de type monofilament.

2. Pneumatique (1) selon la revendication 1, **dans lequel** la hauteur radiale Hs des éléments en relief (22) de la bande de roulement (2) est au moins égale à 5.5 mm et au plus égale à 7.5 mm, de préférence au plus égale à 7 mm.

3. Pneumatique (1) selon l'une des revendications 1 ou 2, **dans lequel** le taux d'entaillement volumique T_{EV} de la bande de roulement (2) est au plus égal à 28%.

4. Pneumatique (1) selon l'une quelconque des revendications précédentes, **dans lequel** le taux d'entaillement volumique T_{EV} de la bande de roulement (2) est au moins égal à 25% et au plus égal à 27%.

5. Pneumatique (1) selon l'une quelconque des revendications précédentes, **dans lequel** le volume total V_{CP} de l'ensemble des creux principaux (241) de la bande de roulement (2) est au moins égal à 85%, de préférence au moins égal à 88%, du volume total Vc des creux (24) de la bande de roulement (2)

6. Pneumatique (1) selon l'une quelconque des revendications précédentes, **dans lequel** le au moins un mélange élastomérique constitutif de la bande de roulement (2) a une température de transition vitreuse T_{g} au moins égale à -16°C et au plus égale à -8°C.

7. Pneumatique (1) selon l'une quelconque des revendications précédentes, **dans lequel** le au moins un mélange élastomérique constitutif de la bande de roulement (2) a une perte dynamique tgδ à 23°C au plus égale à 0.27.

8. Pneumatique (1) selon l'une quelconque des revendications précédentes, **dans lequel** les renforts métalliques (411, 421) de chacune des au moins deux couches de travail (41, 42) de l'armature de travail (4) forment, avec la direction circonférentielle XX' du pneumatique, un angle (A_{T1}, A_{T2}), mesuré dans le plan équatorial XZ du pneumatique, dont la valeur absolue est au plus égale à 30°.

9. Pneumatique (1) selon l'une quelconque des revendications précédentes, **dans lequel** les renforts métalliques (411, 421) de chacune des au moins deux couches de travail (41, 42) de l'armature de travail (4) sont des monofilaments en acier dont la résistance à la rupture en traction Rm, mesurées selon la norme ISO 6892 de 1984, est au moins égale à 3000 MPa, de préférence au moins égale à 3500 MPa.

10. Pneumatique (1) selon l'une quelconque des revendications précédentes, **dans lequel** les renforts métalliques (411, 421) de chacune des au moins deux couches de travail (41, 42) de l'armature de travail (4) sont répartis selon une densité d_{T} au moins égale à 120 fils/dm et au plus égale à 180 fils /dm.

11. Pneumatique (1) selon l'une quelconque des revendications précédentes, **dans lequel** chaque couche de travail (41, 42) de l'armature de travail (4) a une épaisseur radiale moyenne E_{T} au moins égale à D+0.3 mm et au plus égale à D+0.5 mm, avec D diamètre du cercle circonscrit à la section S du renfort métallique de type monofilament.

12. Pneumatique (1) selon l'une quelconque des revendications précédentes, **dans lequel** une couche intermédiaire (6) comprenant au moins un mélange élastomérique est positionnée radialement à l'intérieur de la bande de roulement (2) et radialement à l'extérieur de l'armature de frettage (3).

13. Pneumatique (1) selon la revendication précédente, **dans lequel** la couche intermédiaire (6) a avantageusement une épaisseur radiale E au moins égale à 0.3 mm et au plus égale à 4.0 mm.

14. Pneumatique (1) selon l'une des revendications 12 ou 13, **dans lequel** le au moins un mélange élastomérique, constitutif de la couche intermédiaire (6), a une dureté Shore A au moins égale à 59 et au plus égale à 69 et une perte dynamique tgδ à 23°C au moins égale à 0.08 et au plus égale à 0.20.

15. Pneumatique (1) selon l'une quelconque des revendications précédentes, **dans lequel** l'agencement des éléments en relief (22) de la bande de roulement (2) est dissymétrique par rapport au plan équatorial XZ du pneumatique, de telle sorte que le taux d'entaillement volumique T_{EV1} de la moitié de bande roulement destinée à être montée du côté intérieur du véhicule est au moins égal au taux d'entaillement volumique T_{EV2} de la moitié de bande roulement destinée à être montée du côté extérieur du véhicule.

## Patentansprüche

1. Reifen (1) für einen Personenkraftwagen, umfassend:
- einen Laufstreifen (2), der dazu bestimmt ist, über eine Lauffläche (21) mit einem Boden in Kontakt zu gelangen, und erhabene Elemente (22) umfasst, die sich radial nach außen von einer Bodenfläche (23) aus bis zu der Lauffläche (21) über eine radiale Höhe Hₛ, gemessen in einer Äquatorialebene XZ des Reifens, von höchstens 8 mm erstrecken,
- wobei die erhabenen Elemente (22) ein Gesamtvolumen V_{P} aufweisen und durch Vertiefungen (24) getrennt sind, die ein Gesamtvolumen V_{C} aufweisen, wobei ein Teil der Vertiefungen (24) Hauptvertiefungen (241) sind, die jeweils eine mittlere Breite von mindestens 6 mm aufweisen, und die Gesamtheit der Hauptvertiefungen (241) ein Gesamtvolumen V_{CP} aufweist,
- wobei der Laufstreifen (2) einen volumenbezogenen Negativprofilanteil T_{EV}, der als das Verhältnis zwischen dem Gesamtvolumen V_{C} der Vertiefungen (24) und der Summe aus dem Gesamtvolumen V_{C} der Vertiefungen (24) und dem Gesamtvolumen V_{P} der erhabenen Elemente (22) definiert ist, von mindestens 22 % und höchstens 30 % aufweist,
- wobei der Laufstreifen (2) ferner mindestens eine Elastomermischung umfasst, die eine gemäß der Norm ASTM D 5992-96 mit einem Viskositätsanalysator bestimmte Glasübergangstemperatur T_{g}, eine gemäß den Normen DIN 53505 oder ASTM 2240 gemessene Shore-Härte A und einen am Viskositätsanalysator bei einer Spitze-Spitze-Amplitude von 0,7 MPa und einer Frequenz von 10 Hz bestimmten dynamischen Verlust tgδ bei 23 °C aufweist,
- eine Versteifungsbewehrung (3) radial innerhalb des Laufstreifens (2), die mindestens eine Versteifungsschicht (31) umfasst, die in eine Elastomermischung eingebettete textile Verstärkungen (311) umfasst, die zueinander parallel sind und mit einer Umfangsrichtung XX' des Reifens einen in der Äquatorialebene XZ des Reifens gemessenen Winkel A_{F} mit einem absoluten Wert von höchstens 5° bilden,
- eine Arbeitsbewehrung (4) radial innerhalb der Versteifungsbewehrung (3), die mindestens zwei radial übereinander liegende Arbeitsschichten (41, 42) umfasst, die in eine Elastomermischung einbettete metallische Verstärkungen (411, 421) umfassen, die in jeder Schicht zueinander parallel sind und sich von einer Schicht zur folgenden überkreuzen, wobei sie mit der Umfangsrichtung XX' des Reifens einen in der Äquatorialebene XZ des Reifens gemessenen Winkel (A_{T1}, A_{T2}) bilden, dessen absoluter Wert mindestens 20° und höchstens 40° beträgt,
- eine Karkassenbewehrung (5), die mindestens eine Karkassenschicht (51) umfasst, die in ein Elastomermaterial eingebettete textile Verstärkungen (511) umfasst, die zueinander parallel sind und mit der Umfangsrichtung XX' des Reifens einen Winkel A_{C} von mindestens 85° und höchstens 95° bilden, wobei die radiale Höhe Hₛ der erhabenen Elemente (22) des Laufstreifens (2) mindestens 5,0 mm beträgt, wobei das Gesamtvolumen V_{CP} der Gesamtheit der Hauptvertiefungen (241) des Laufstreifens (2) mindestens 80 % vom Gesamtvolumen V_{C} der Vertiefungen (24) des Laufstreifens (2) beträgt,
**dadurch gekennzeichnet, dass** die mindestens eine Elastomermischung, die Bestandteil des Laufstreifens (2) ist, eine Glasübergangstemperatur T_{g} von mindestens - 22 °C und höchstens -5 °C, eine Shore-Härte A von mindestens 52 und höchstens 57 und einen dynamischen Verlust tgδ bei 23°C von mindestens 0,13 und höchstens 0,39 aufweist, dass die metallischen Verstärkungen (411, 421) jeder der mindestens zwei Arbeitsschichten (41, 42) der Arbeitsbewehrung (4) Monofilamente aus Stahl sind, die einen Querschnitt S aufweisen, der in einen Kreis mit dem Durchmesser D einbeschrieben ist und dessen kleinstes Maß mindestens 0,20 mm und höchstens 0,5 mm beträgt, dass die metallischen Verstärkungen (411, 421) jeder der mindestens zwei Arbeitsschichten (41, 42) der Arbeitsbewehrung (4) gemäß einer Dichte d_{T} von mindestens 100 Drähte/dm und höchstens 200 Drähte/dm verteilt sind und dass jede Arbeitsschicht (41, 42) der Arbeitsbewehrung (4) eine mittlere radiale Dicke E_{T} von mindestens D+0,1 mm und höchstens D+0,6 mm aufweist, wobei D der Durchmesser des Kreises ist, der den Querschnitt S der metallischen Verstärkung vom Monofilamenttyp umschreibt.

2. Reifen (1) nach Anspruch 1, bei dem die radiale Höhe H_{S} der erhabenen Elemente (22) des Laufstreifens (2) mindestens 5,5 mm und höchstens 7,5 mm, bevorzugt höchstens 7 mm beträgt.

3. Reifen (1) nach einem der Ansprüche 1 oder 2, bei dem der volumenbezogene Negativprofilanteil T_{EV} des Laufstreifens (2) höchstens 28 % beträgt.

4. Reifen (1) nach einem der vorhergehenden Ansprüche, bei dem der volumenbezogene Negativprofilanteil T_{EV} des Laufstreifens (2) mindestens 25 % und höchstens 27 % beträgt.

5. Reifen (1) nach einem der vorhergehenden Ansprüche, bei dem das Gesamtvolumen V_{CP} der Gesamtheit der Hauptvertiefungen (241) des Laufstreifens (2) mindestens 85 %, bevorzugt mindestens 88 %, vom Gesamtvolumen V_{C} der Vertiefungen (24) des Laufstreifens (2) beträgt.

6. Reifen (1) nach einem der vorhergehenden Ansprüche, bei dem die mindestens eine Elastomermischung, die Bestandteil des Laufstreifens (2) ist, eine Glasübergangstemperatur t_{g} von mindestens -16 °C und höchstens -8 °C aufweist.

7. Reifen (1) nach einem der vorhergehenden Ansprüche, bei dem die mindestens eine Elastomermischung, die Bestandteil des Laufstreifens (2) ist, einen dynamischen Verlust tgδ bei 23 °C von höchstens 0,27 aufweist.

8. Reifen (1) nach einem der vorhergehenden Ansprüche, bei dem die metallischen Verstärkungen (411, 421) jeder der mindestens zwei Arbeitsschichten (41, 42) der Arbeitsbewehrung (4) mit der Umfangsrichtung XX' des Reifens einen in der Äquatorialebene XZ des Reifens gemessenen Winkel (A_{T1,} A_{T2}) bilden, dessen absoluter Wert höchstens 30° beträgt.

9. Reifen (1) nach einem der vorhergehenden Ansprüche, bei dem die metallischen Verstärkungen (411 421) jeder der mindestens zwei Arbeitsschichten (41, 42) der Arbeitsbewehrung (4) Monofilamente aus Stahl sind, deren nach der Norm ISO 6892 von 1984 gemessene Zugfestigkeit Rm mindestens 3000 MPa, bevorzugt mindestens 3500 MPa beträgt.

10. Reifen (1) nach einem der vorhergehenden Ansprüche, bei dem die metallischen Verstärkungen (411 421) jeder der mindestens zwei Arbeitsschichten (41, 42) der Arbeitsbewehrung (4) gemäß einer Dichte d_{T} von mindestens 120 Drähten/dm und höchstens 180 Drähten/dm verteilt sind.

11. Reifen (1) nach einem der vorhergehenden Ansprüche, bei dem jede Arbeitsschicht (41, 42) der Arbeitsbewehrung (4) eine mittlere radiale Dicke E_{T} von mindestens D+0,3 mm und höchstens D+0,5 mm aufweist, wobei D der Durchmesser des Kreises ist, der den Querschnitt S der metallischen Verstärkung vom Monofilamenttyp umschreibt.

12. Reifen (1) nach einem der vorhergehenden Ansprüche, bei dem eine Zwischenschicht (6), die mindestens eine Elastomermischung umfasst, radial innerhalb des Laufstreifens (2) und radial außerhalb der Versteifungsbewehrung (3) angeordnet ist.

13. Reifen (1) nach dem vorhergehenden Anspruch, bei dem die Zwischenschicht (6) vorteilhafterweise eine radiale Dicke E von mindestens 0,3 mm und höchstens 4,0 mm aufweist.

14. Reifen (1) nach einem der Ansprüche 12 oder 13, bei dem die mindestens eine Elastomermischung, die Bestandteil der Zwischenschicht (6) ist, eine Shore-Härte A von mindestens 59 und höchstens 69 und einen dynamischen Verlust tgδ bei 23°C von mindestens 0,08 und höchstens 0,20 aufweist.

15. Reifen (1) nach einem der vorhergehenden Ansprüche, bei dem die Anordnung der erhabenen Elemente (22) des Laufstreifens (2) in Bezug auf die Äquatorialebene XZ des Reifens asymmetrisch ist, so dass der volumenbezogene Negativprofilanteil T_{EV1} der Laufstreifenhälfte, die dazu bestimmt ist, auf der Innenseite des Fahrzeugs montiert zu werden, mindestens gleich dem volumenbezogenen Negativprofilanteil T_{EV2} der Laufstreifenhälfte ist, die dazu bestimmt ist, auf der Außenseite des Fahrzeugs montiert zu werden.

## Claims

1. Tyre (1) for a passenger vehicle, comprising:
- a tread (2) that is intended to come into contact with the ground via a tread surface (21) and comprises raised elements (22) extending radially outwards from a bottom surface (23) to the tread surface (21) over a radial height Hₛ, measured in an equatorial plane XZ of the tyre, at most equal to 8 mm,
- the raised elements (22) having a total volume V_{P} and being separated by voids (24) having a total volume Vc, some of the voids (24) being main voids (241), each having a mean width at least equal to 6 mm, and the set of main voids (241) having a total volume V_{CP},
- the tread (2) having a volumetric void ratio T_{EV}, defined as being the ratio between the total volume V_{C} of the voids (24) and the sum of the total volume V_{C} of the voids (24) and the total volume Vp of the raised elements (22), at least equal to 22% and at most equal to 30%,
- the tread (2) also comprising at least one elastomeric compound having a glass transition temperature T_{g} determined on a viscosity analyser according to the standard ASTM D 5992-96, a Shore A hardness according to the standards DIN 53505 or ASTM 2240 and a dynamic loss tgδ at 23°C measured with the viscosity analyser at a peak-to-peak amplitude equal to 0.7 MPa and a frequency equal to 10 Hz,
- a hoop reinforcement (3), radially on the inside of the tread (2), comprising at least one hooping layer (31) comprising textile reinforcers (311) that are coated in an elastomeric compound, are mutually parallel and form, with a circumferential direction XX' of the tyre, an angle A_{F}, measured in the equatorial plane XZ of the tyre, at most equal to 5° in terms of absolute value,
- a working reinforcement (4), radially on the inside of the hoop reinforcement (3), comprising at least two, radially superposed working layers (41, 42) comprising metal reinforcers (411, 421) that are coated in an elastomeric compound, are mutually parallel in each layer and are crossed from one layer to the next, forming, with the circumferential direction XX' of the tyre, an angle (A_{T1}, A_{T2}), measured in the equatorial plane XZ of the tyre, with an absolute value at least equal to 20° and at most equal to 40°,
- a carcass reinforcement (5) comprising at least one carcass layer (51) comprising textile reinforcers (511) that are coated in an elastomeric material, are mutually parallel and form, with the circumferential direction XX' of the tyre, an angle Ac at least equal to 85° and at most equal to 95°,
the radial height H_{S} of the raised elements (22) of the tread (2) being at least equal to 5.0 mm, the total volume V_{CP} of the set of main voids (241) in the tread (2) being at least equal to 80% of the total volume V_{C} of the voids (24) in the tread (2), **characterized in that** the at least one elastomeric compound that makes up the tread (2) has a glass transition temperature T_{g} at least equal to -22°C and at most equal to -5°C, a Shore A hardness at least equal to 52 and at most equal to 57, and a dynamic loss tgδ at 23°C at least equal to 0.13 and at most equal to 0.39, **in that** the metal reinforcers (411, 421) of each of the at least two working layers (41, 42) of the working reinforcement (4) are steel monofilaments having a cross section S inscribed in a circle of diameter D, the smallest dimension Dmin of which is at least equal to 0.20 mm and at most equal to 0.5 mm, **in that** the metal reinforcers (411, 421) of each of the at least two working layers (41, 42) of the working reinforcement (4) are distributed at a density d_{T} at least equal to 100 threads/dm and at most equal to 200 threads/dm, **and in that** each working layer (41, 42) of the working reinforcement (4) has a mean radial thickness E_{T} at least equal to D+0.1 mm and at most equal to D+0.6 mm, where D is the diameter of the circle circumscribed on the cross section S of the monofilament-type metal reinforcer.

2. Tyre (1) according to Claim 1, **wherein** the radial height H_{S} of the raised elements (22) of the tread (2) is at least equal to 5.5 mm and at most equal to 7.5 mm, preferably at most equal to 7 mm.

3. Tyre (1) according to either of Claims 1 and 2, **wherein** the volumetric void ratio T_{EV} of the tread (2) is at most equal to 28%.

4. Tyre (1) according to any of the preceding claims, **wherein** the volumetric void ratio T_{EV} of the tread (2) is at least equal to 25% and at most equal to 27%.

5. Tyre (1) according to any of the preceding claims, **wherein** the total volume V_{CP} of the set of main voids (241) in the tread (2) is at least equal to 85%, preferably at least equal to 88%, of the total volume V_{C} of the voids (24) in the tread (2).

6. Tyre (1) according to any of the preceding claims, **wherein** the at least one elastomeric compound that makes up the tread (2) has a glass transition temperature T_{g} at least equal to -16°C and at most equal to -8°C.

7. Tyre (1) according to any of the preceding claims, **wherein** the at least one elastomeric compound that makes up the tread (2) has a dynamic loss tgδ at 23°C at most equal to 0.27.

8. Tyre (1) according to any of the preceding claims, **wherein** the metal reinforcers (411, 421) of each of the at least two working layers (41, 42) of the working reinforcement (4) form, with the circumferential direction XX' of the tyre, an angle (A_{T1}, A_{T2}), measured in the equatorial plane XZ of the tyre, with an absolute value at most equal to 30°.

9. Tyre (1) according to any of the preceding claims, **wherein** the metal reinforcers (411, 421) of each of the at least two working layers (41, 42) of the working reinforcement (4) are steel monofilaments, the ultimate tensile strength Rm, measured according to standard ISO 6892 of 1984, of which is at least equal to 3000 MPa, preferably at least equal to 3500 MPa.

10. Tyre (1) according to any of the preceding claims, **wherein** the metal reinforcers (411, 421) of each of the at least two working layers (41, 42) of the working reinforcement (4) are distributed at a density d_{T} at least equal to 120 threads/dm and at most equal to 180 threads/dm.

11. Tyre (1) according to of the preceding claims, **wherein** each working layer (41, 42) of the working reinforcement (4) has a mean radial thickness E_{T} at least equal to D+0.3 mm and at most equal to D+0.5 mm, where D is the diameter of the circle circumscribed on the cross section S of the monofilament-type metal reinforcer.

12. Tyre (1) according to any of the preceding claims, **wherein** an intermediate layer (6) comprising at least one elastomeric compound is positioned radially on the inside of the tread (2) and radially on the outside of the hoop reinforcement (3).

13. Tyre (1) according to the preceding claim, **wherein** the intermediate layer (6) advantageously has a radial thickness E at least equal to 0.3 mm and at most equal to 4.0 mm.

14. Tyre (1) according to any of claim 12 or 13, **wherein** the at least one elastomeric compound that makes up the intermediate layer (6) has a Shore A hardness at least equal to 59 and at most equal to 69 and a dynamic loss tgδ at 23°C at least equal to 0.08 and at most equal to 0.20.

15. Tyre (1) according to any of the preceding claims, **wherein** the arrangement of the raised elements (22) of the tread (2) is asymmetric with respect to the equatorial plane XZ of the tyre, such that the volumetric void ratio T_{EV1} of the tread half intended to be mounted on the inboard side of the vehicle is at least equal to the volumetric void ratio T_{EV2} of the tread half intended to be mounted on the outboard side of the vehicle.
